# EUROPEAN PATENT APPLICATION

(11) **EP 4 707 320 A1**
(43) Date of publication of application: **11.03.2026**
(21) Application number: 23939297.0
(22) Date of filing: 22.11.2023
(51) Int. Cl.: C08G 63/20, C08G 63/78, C08L 67/02, C08J 5/18, B65D 65/46

(54) **BIODEGRADABLE ALIPHATIC POLYESTER COMPOSITION, AND PREPARATION METHOD THEREFOR AND USE THEREOF**

(30) Priority: 31.05.2023 CN 202310634185
(71) Applicant: KINGFA SCI. & TECH. CO., LTD., Guangzhou, Guangdong 510663 (CN); Zhuhai Kingfa Biomaterial Co., Ltd., Zhuhai, Guangdong 519050 (CN)
(72) Inventor: LU, Changli, Guangzhou, Guangdong 510663 (CN); CHEN, Pingxu, Guangzhou, Guangdong 510663 (CN); YE, Nanbiao, Guangzhou, Guangdong 510663 (CN); ZENG, Xiangbin, Guangzhou, Guangdong 510663 (CN); JIAO, Jian, Guangzhou, Guangdong 510663 (CN); GUO, Zhilong, Guangzhou, Guangdong 510663 (CN); WANG, Chaojun, Guangzhou, Guangdong 510663 (CN); OUYANG, Chunping, Guangzhou, Guangdong 510663 (CN); ZHANG, Erjie, Guangzhou, Guangdong 510663 (CN)
(74) Representative: Metida
(86) International application number: PCT/CN2023/133445
(87) International publication number: WO 2024/244327

(57) **Abstract**

The present disclosure relates to a biodegradable aliphatic polyester composition, a preparation method thereof, and a use as a packaging film, belonging to the technical field of biodegradable materials. The biodegradable aliphatic polyester composition of this disclosure comprises a biodegradable aliphatic polyester and a cyclic ester, wherein the biodegradable aliphatic polyester comprises: Component A, a dicarboxylic acid, based on a total molar amount of the component A, comprising: a1, 65-95 mol% of succinic acid, or an ester derivative of the succinic acid, or a mixture thereof; and a2, 5-35 mol% of adipic acid, or an ester derivative of the adipic acid, or a mixture thereof; Component B, 1,4-butanediol, at least in an equimolar amount to that of the Component A; the cyclic ester comprises compounds shown in formula (I) and formula (II), based on a total weight of the biodegradable aliphatic polyester composition, a total content of the cyclic ester with structures shown in formula (I) and formula (II) is 538-1100 ppm; a content of total volatile organic compounds (TVOC) in the biodegradable aliphatic polyester composition is no more than 157 ppm.

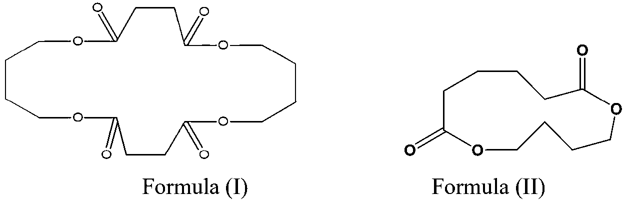

## Description

### TECHNICAL FIELD

The present disclosure relates to the technical field of biodegradable materials, and in particular to a biodegradable aliphatic polyester composition, a preparation method and a use thereof.

### BACKGROUND

Poly(butylene succinate-co-adipate) (PBSA) is synthesized from 1,4-butanediol. PBSA has good processing properties and can be processed on common molding equipment using methods such as extrusion, injection molding, blow molding, spinning, thermoforming, lamination, and foaming, etc. PBSA products can be widely used, primarily in the packaging field, such as shrink films and food preservation films.

In the synthesis process of biodegradable polyesters, a monomeric diacid and a monomeric diol easily undergo esterification to generate small molecule compounds, such as cyclic esters or polyester oligomers, which are prone to migration during use. When biodegradable polyesters are applied in packaging products (especially food packaging), a migration issue of the small molecule compounds is particularly critical.

When biodegradable polyesters are applied in packaging films, the packaging films are required to have good adhesive properties. That is, it is essential that a film have an ability to adhere to itself and other non-adhesive surfaces without the addition of adhesives. This property allows users of such film to wrap one or more layers of the film around an object (e.g., food on a plate), thereby sealing up the object. Meanwhile, to facilitate clear identification of the packaged object by consumers without unpacking it, seen from a commercial perspective, it is highly desirable that the product packaged in the film can be as clearly visible as possible, which places very high demands on the transparency of the film.

An objective of the present disclosure is to develop a biodegradable aliphatic polyester material with low migration, high adhesion capability and high transparency, so as to meet the requirements of food contact packaging films.

### SUMMARY OF THE DISCLOSURE

An objective of this disclosure is to overcome shortcomings, such as high migration, low adhesion capability and poor transparency in the prior art, and to provide a biodegradable aliphatic polyester composition. This biodegradable aliphatic polyester composition comprises 538-1100 parts per million (ppm) of a cyclic ester and exhibits low migration, high adhesion capability, and high transparency.

Another objective of the present disclosure is to provide a preparation method of the biodegradable aliphatic polyester composition.

Yet another objective of the present disclosure is to provide a use of the biodegradable aliphatic polyester composition in the field of food packaging films.

To achieve the above objectives, the present disclosure adopts the following technical solution:

A biodegradable aliphatic polyester composition, comprising components as follows:
(i) a biodegradable aliphatic polyester, comprising:
   Component A, a dicarboxylic acid, based on a total molar amount of the component A, comprising:
      a1, 65-95 mol% of succinic acid, or an ester derivative of the succinic acid, or a mixture thereof;
      a2, 5-35 mol% of adipic acid, or an ester derivative of the adipic acid, or a mixture thereof;
   Component B, 1,4-butanediol, at least in an equimolar amount to that of the Component A;
(ii) a cyclic ester, comprising compounds shown in formula (I) and formula (II): 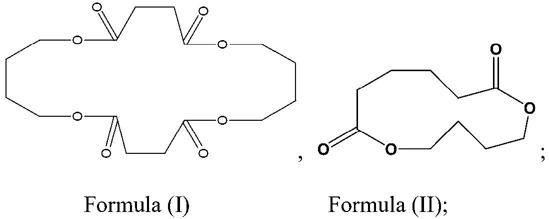
   based on a total weight of the biodegradable aliphatic polyester composition, a total content of the cyclic ester with structures shown in formula (I) and formula (II) is 538-1100 ppm; it can be understood, based on the total weight of the biodegradable aliphatic polyester composition, the total content of the cyclic ester with structures shown in formulas (I) and (II) can be, but is not limited to, 538 ppm, 582 ppm, 600 ppm, 620 ppm, 700 ppm, 750 ppm, 850 ppm, 900 ppm, 1000 ppm, or 1100 ppm;
   a content of total volatile organic compounds (TVOC) in the biodegradable aliphatic polyester composition is no more than 157 ppm.

Preferably, the Component A, based on the total molar amount of the component A, comprises:
a1, 72-82 mol% of the succinic acid, or the ester derivative of the succinic acid, or the mixture thereof;
a2, 18-28 mol% of the adipic acid, or the ester derivative of the adipic acid, or the mixture thereof.

Optionally, the ester derivative of the succinic acid is at least one selected from the group consisting of dimethyl succinate, diethyl succinate, di-n-propyl succinate, diisopropyl succinate, di-n-butyl succinate, diisobutyl succinate, di-tert-butyl succinate, di-n-pentyl succinate, diisopentyl succinate, and di-n-hexyl succinate. An anhydride of the succinic acid is also a suitable ester-forming derivative. Dimethyl succinate and succinic anhydride are preferred, and succinic anhydride is particularly preferred.

Optionally, the ester derivative of the adipate acid is at least one selected from the group consisting of dimethyl adipate, diethyl adipate, di-n-propyl adipate, diisopropyl adipate, di-n-butyl adipate, diisobutyl adipate, di-tert-butyl adipate, di-n-pentyl adipate, diisopentyl adipate, and di-n-hexyl adipate. An anhydride of the adipate acid is also a suitable ester-forming derivative.

In the present disclosure, the dicarboxylic acid or ester derivatives thereof can be used alone or in mixtures of two or more.

Preferably, the total content of the cyclic ester with structures shown in formulas (I) and (II) is 538-850 ppm, based on the total weight of the biodegradable aliphatic polyester composition.

More preferably, the total content of the cyclic ester with structures shown in formulas (I) and (II) is 538-620 ppm, based on the total weight of the biodegradable aliphatic polyester composition.

Preferably, the biodegradable aliphatic polyester composition further comprises a chain extender, wherein a content of the chain extender is in a range of from 0.05 wt.% to 2.0 wt.%, based on the total weight of the biodegradable aliphatic polyester composition. More preferably, the content of the chain extender is in a range of from 0.1 wt.% to 1.5 wt.%.

Preferably, the chain extender comprises one or more components selected from the group consisting of:
c1, an isocyanate;
c2, a peroxide;
c3, an epoxide; and
c4, oxazoline, oxazine, caprolactam, and/or carbodiimide.

The isocyanate used in this disclosure may be an aromatic diisocyanate or an aliphatic diisocyanate, for example, the aromatic diisocyanate can be toluene-2,4-diisocyanate, toluene-2,6-diisocyanate, diphenylmethane-2,2'-diisocyanate, diphenylmethane-2,4'-diisocyanate, diphenylmethane-4,4'-diisocyanate, naphthalene-1,5-diisocyanate, or xylene diisocyanate.

The diphenylmethane-2,2'-diisocyanate, diphenylmethane-2,4'-diisocyanate, or diphenylmethane-4,4'-diisocyanate is particularly preferred.

The isocyanate used in this disclosure also may be tris(4-isocyanate-phenyl)methane with three rings. This polynuclear aromatic diisocyanate can, for example, be formed during production of diisocyanates with one or two rings.

For this disclosure, the aliphatic diisocyanate may be any straight-chain or branched alkylene diisocyanate or cycloalkylene diisocyanate containing 2 to 20 carbon atoms, preferably 3 to 12 carbon atoms, such as hexamethylene diisocyanate, pentamethylene diisocyanate, isophorone diisocyanate, or methylenebis(4-isocyanatocyclohexane). The hexamethylene diisocyanate is particularly preferred.

The peroxide in the present disclosure may be one or a mixture of two or more compounds selected from the group consisting of: benzoyl peroxide, 1,1-di(tert-butylperoxy)-3,3,5-trimethylcyclohexane, 1,1-di(tert-butylperoxy)methylcyclododecane, n-butyl 4,4-di(butylperoxy)valerate, dicumyl peroxide, tert-butyl peroxybenzoate, dibutyl peroxide, α,α'-bis(tert-butyl-peroxy)diisopropylbenzene, 2,5-dimethyl-2,5-di(tert-butylperoxy)hexane, 2,5-dimethyl-2,5-di(tert-butylperoxy)hex-3-yne, and t-butylperoxycumene.

The epoxide in the present disclosure may be one or more selected from the group consisting of: diglycidyl ether, hexamethylene diglycidyl ether, sorbitol diglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, neopentyl glycol diglycidyl ether, ethylene glycol diglycidyl ether, diethylene glycol diglycidyl ether, poly(ethylene glycol) diglycidyl ether, propylene glycol diglycidyl ether, dipropylene glycol diglycidyl ether, poly(propylene glycol) diglycidyl ether, poly(butylene glycol) diglycidyl ether, and a copolymer comprising an epoxy group and based on styrene, acrylate and/or methacrylate.

Preferably, the dioxazoline in the present disclosure may be 2,2'-bis(2-oxazoline), bis(2-oxazolinyl)methane, 1,2-bis(2-oxazolinyl)ethane, 1,3-bis(2-oxazolinyl)propane, or 1,4-bis(2-oxazolinyl)butane, especially, 1,4-bis(2-oxazolinyl)benzene, 1,2-bis(2-oxazolinyl)benzene, or 1,3-bis(2-oxazolinyl)benzene.

Preferably, the dioxazine is 2,2'-bis(2-dioxazine), bis(2-dioxazinyl)methane, 1,2-bis(2-dioxazinyl)ethane, 1,3-bis(2-dioxazinyl)propane, or 1,4-bis(2-dioxazinyl)butane, especially 1,4-bis(2-dioxazinyl)benzene, 1,2-bis(2-dioxazinyl)benzene, or 1,3-bis(2-dioxazinyl)benzene.

The carbodiimide may be *N*,*N*'-di-2,6-diisopropylphenylcarbodiimide, *N,N'*-di-o-tolylcarbodiimide, *N,N'*-diphenylcarbodiimide, *N,N'*-dioctyldecylcarbodiimide, *N,N'*-di-2,6-dimethylphenylcarbodiimide, *N*-tolyl-*N'*-cyclohexylcarbodiimide, *N,N*'-di-2,6-di-tert-butylphenylcarbodiimide, *N,N*'-di-2,4,6-triisobutylphenylcarbodiimide, diisopropylcarbodiimide, dimethylcarbodiimide, diisobutylcarbodiimide, dioctylcarbodiimide, tert-butylisopropylcarbodiimide, di-β-naphthylcarbodiimide, or di-tert-butylcarbodiimide.

Preferably, the biodegradable aliphatic polyester composition may further comprise 0-3 wt.% of a crosslinking agent having at least three functional groups, based on the total weight of the biodegradable aliphatic polyester composition. Preferably, the crosslinking agent accounts for 0.01 wt.% - 2 wt.%, more preferably, 0.05 wt.% -1 wt.%, and particularly preferably 0.20 wt.% - 0.31 wt.% of the biodegradable aliphatic polyester composition.

The crosslinking agent having at least three functional groups is particularly preferably a compound having 3-6 hydroxyl groups. Optionally, the crosslinking agent is at least one selected from the group consisting of tartaric acid, citric acid, malic acid, trimethylolpropane, trimethylolethane, pentaerythritol, polyether triol, glycerol, 1,3,5-benzenetricarboxylic acid, 1,2,4-benzenetricarboxylic acid, 1,2,4-benzenetricarboxylic anhydride, 1,2,4,5-benzenetetracarboxylic acid, and pyromellitic dianhydride. More preferably, the crosslinking agent is a polyol, such as trimethylolpropane, pentaerythritol, or glycerol, and glycerol is particularly preferred.

According to a standard method ISO 1133-2-2011, a melt mass-flow rate (MFR) of the biodegradable aliphatic polyester composition of the present disclosure is 1.0-40.0 g/10min at 190 °C with a load of 2.16 kg, preferably 2.5-12 g/10min, and particularly preferably 3.5-8 g/10min.

According to a standard method GB/T 32366-2015, a carboxyl content (AN) of the biodegradable aliphatic polyester composition of this disclosure is 5-60 mol/t, preferably 10-40 mol/t, and particularly preferably 15-28 mol/t.

Total volatile organic compounds (TVOC) in the biodegradable aliphatic polyester composition can produce unpleasant odors and affect human health. A TVOC content in the biodegradable aliphatic polyester composition of this disclosure, based on the total weight of the biodegradable aliphatic polyester composition, is preferably no more than 89 ppm, and particularly, preferably no more than 53 ppm.

An odor rating of the biodegradable aliphatic polyester composition, according to a standard FLTM BO131-03, is no greater than 5, preferably no greater than 3.5, and particularly preferably no greater than 2.0.

The present disclosure also claims a preparation method of the above-mentioned biodegradable aliphatic polyester composition, comprising steps as follows:
S1. mixing Component a1 with a portion of Component B, with or without a catalyst, to obtain a Slurry A; subjecting the Slurry A to an esterification reaction or a transesterification reaction until an intrinsic viscosity of a first esterified product, as determined according to GB/T 17931-1999, is 0.05-0.12 dL/g;
S2. mixing Component a2 with remaining Component B, with or without the catalyst, to obtain a Slurry B; subjecting the Slurry B to an esterification reaction or a transesterification reaction until an intrinsic viscosity of a second esterified product, as determined according to GB/T 17931-1999, is 0.05-0.14 dL/g;
S3. mixing the first and second esterified products obtained in steps S1 and S2 to obtain a mixture of the first and second esterified products; subjecting the mixture to a pre-polycondensation reaction until an intrinsic viscosity of a prepolymer, as determined according to GB/T 17931-1999, is 0.30-0.55 dL/g;
S4. subjecting the prepolymer obtained in step S3 to a polycondensation reaction until an intrinsic viscosity of a polycondensed product, as determined according to GB/T 17931-1999, is 1.18-1.85 dL/g;
S5. slicing the polycondensed product obtained in step S4 to obtain a polyester granule, and subjecting the polyester granule to a contact treatment with an organic solvent or an aqueous solution of the organic solvent;
S6. drying a treated product obtained in step S5, and then performing a solid-phase polycondensation reaction to obtain the biodegradable aliphatic polyester composition.

In the preparation method of the present disclosure, the Component a1 (i.e., the succinic acid, or the ester derivative of the succinic acid, or the mixture thereof) and the Component a2 (i.e., the adipic acid or the ester derivative of the adipic acid, or the mixture thereof) are respectively subjected to an esterification reaction or a transesterification reaction. Then, a polycondensed product obtained in further steps is sliced, and subsequently subjected to contact treatment with an organic solvent or an aqueous solution of the organic solvent, followed by the solid-phase polycondensation reaction.

Preferably, in the step S1, a ratio of the Component a1 to the Component B in the slurry A is 1.0 molar equivalent of the Component a1: (1.0-1.8) molar equivalents, preferably (1.05-1.60) molar equivalents, and particularly preferably (1.15-1.50) molar equivalents of the Component B.

Preferably, in the step S2, a ratio of the Component a2 to the component B in the slurry B is 1.0 molar equivalent of the Component a2: (1.1-2.2) molar equivalents, preferably (1.2-1.8) molar equivalents, and particularly preferably (1.3-1.6) molar equivalents of the Component B.

Preferably, in the step S1 and/or the step S2, all or a part of the catalyst is stoichiometrically added. The catalyst used typically comprises a zinc compound, an aluminum compound, and/or especially a titanium compound. Compared to tin compounds, antimony compounds, cobalt compounds, and lead compounds commonly used in literatures, another advantage of a titanium catalyst, such as tetrabutyl titanate or tetraisopropyl titanate, is that the catalyst in a residual amount in a product or a downstream product has low toxicity. This is particularly important for biodegradable polyesters, because they enter the environment directly, for example, in a form of a compost bag or a covering film. The catalyst is preferably a titanium catalyst.

Preferably, based on the total weight of the biodegradable aliphatic polyester composition, an additive amount of the titanium catalyst is 40-180 ppm (calculated by a titanium element content).

Preferably, in the step S1, the esterification reaction or the transesterification reaction is performed at a temperature of 140-220 °C, preferably at a temperature of 155-205 °C; the esterification reaction or the transesterification reaction is performed at a pressure of 0.6-1.2 bar, preferably at a pressure of 0.8-1.0 bar. The step S1 can be carried out in a mixing device, with a typical reaction time of 2-4 hours, to produce the first esterified product with an intrinsic viscosity of 0.05-0.12 dL/g, measured in a phenol/o-cresol solution at a weight ratio of 1:1 in a water bath at a constant temperature of 25 ± 0.05°C, according to GB/T 17931-1999.

Preferably, in the step S2, the esterification reaction or the transesterification reaction is performed at a temperature of 180-230 °C, more preferably at a temperature of 190-210 °C; the esterification reaction or the transesterification reaction is performed at a pressure of 0.8-1.1 bar, more preferably at a pressure of 0.9-1.0 bar. The step S2 can be carried out in a mixing device, with a typical reaction time of 3-5 hours, to produce the second esterified product with an intrinsic viscosity of 0.05-0.14 dL/g, measured in a phenol/o-cresol solution at a weight ratio of 1:1 in a water bath at a constant-temperature of 25 ± 0.05°C, according to GB/T 17931-1999.

Excess diol components are typically removed by distillation and returned to the loop after, for example, distillation purification.

Preferably, in the step S3, the mixture of the first and second esterified products, together with the remaining catalyst, is added to a reactor suitable for a pre-condensation reaction to undergo the pre-polycondensation reaction at a reaction temperature of 225-260 °C, preferably at a reaction temperature of 235-245 °C, at a pressure of 0.2-0.7 bar, preferably at a pressure of 0.35-0.55 bar, with a reaction time of 75-180 minutes. Thus, a prepolymer can be produced, with an intrinsic viscosity of 0.30-0.55 dL/g, measured in a phenol/o-cresol solution at a weight ratio of 1:1 in a water bath at a constant temperature of 25±0.05°C, according to GB/T 17931-1999. In a preferred embodiment, the intrinsic viscosity of the prepolymer is controlled to be 0.35-0.48 dL/g.

Preferably, in the step S4, if appropriate, a catalyst passivator is mixed with the prepolymer. An available passivator may be, in particular, a phosphorus compound, such as phosphorous acid, or phosphoric acid. It should be noted that if a highly active titanium catalyst is used, a passivator can be added. An additive amount of the passivator can be 0.001-0.1 wt.%, preferably 0.01-0.05 wt.%, based on a theoretical weight of the polymer obtained in the step S4. A molar ratio of a Ti element in the catalyst to a P element in the passivator (mol/mol) is preferably set to be (1.1-1.5):1, particularly preferably (1.1-1.3):1.

If appropriate, in the step S4, a color stabilizer for a condensation process is mixed with the prepolymer. An available color stabilizer may be, in particular, a phosphorus compound, such as phosphoric acid, phosphorous acid, triphenyl phosphite, triphenyl phosphate, sodium hypophosphite, or sodium phosphite. These phosphorus compounds can also be used in a form of a mixture. The use of the color stabilizer generally leads to a decreased polycondensation rate. The triphenyl phosphate is a particularly suitable color stabilizer, because it has no adverse effect on the polycondensation rate.

An additive amount of the color stabilizer may be 0.001-1.5 wt.%, preferably 0.01-1.0 wt.%, based on the theoretical weight of the polymer obtained in the step S4. Preferably, a molar ratio of the Ti element in the catalyst to a P element in the color stabilizer (mol/mol) is set to be 1.0:(0.3-1.0), particularly preferably 1.0:(0.5-1.0).

In the step S4, if appropriate, an activator used for the condensation process is mixed with the prepolymer. An available activator may be, in particular, a phosphorus compound, such as disodium hydrogen phosphate, calcium hypophosphite, calcium phosphite, calcium phosphate, sodium hypophosphite, sodium phosphite, triphenyl phosphite, triphenyl phosphate, trimethyl phosphate, triethyl phosphate, tripropyl phosphate, or tributyl phosphate. These phosphorus compounds also can be used in a form of a mixture. Particularly suitable activators are disodium hydrogen phosphate and sodium phosphite.

An additive amount of the activator may be 0.001-1.5 wt.%, preferably 0.01-1.0 wt.%, based on the theoretical weight of the polymer obtained in step S4. Preferably, a molar ratio of the Ti element in the catalyst to a P element in the activator (mol/mol) is preferably set to (1.0-1.5):1, particularly preferably (1.1-1.3):1.

A combined use of the color stabilizer and the activator is of particular concerns. An example is a combined use of triphenyl phosphate and disodium hydrogen phosphate.

The polycondensation reaction in the step S4 is carried out in a finisher. It has been proven that a particularly suitable finisher comprises a reactor, such as a rotating disk reactor or a cage reactor, with a reaction temperature typically set at 235-260°C, preferably 240-255°C, a pressure typically set at 0.2-5 mbar, preferably 0.5~3 mbar, and a typical reaction time of 45-110 minutes, preferably 60-90 minutes. Thus, a polycondensed product can be produced, with an intrinsic viscosity of 1.18-1.85 dL/g, measured in a phenol/o-cresol solution at a weight ratio of 1:1 and in a water bath at a constant temperature of 25 ± 0.05 °C, according to GB/T 17931-1999.

If necessary, a step S4', i.e., a chain extension reaction, can be performed after step S4 and before step S5. The polycondensed product obtained in the step S4, together with a chain extender (a Component C), is added to an extruder, or a continuous kneader (List reactor), or a static mixer. The static mixer can use SMR^{™}, SMX^{™}, or SMXL^{™} components, or a combination thereof. Examples of the List reactor comprise a single-screw DISCOTHERM B reactor, a twin-screw CRP reactor, or an ORP reactor. An available extruder may be a single-screw extruder or a twin-screw extruder. In this disclosure, the chain extension reaction is preferably carried out in an extruder. After chain extension, a chain extension product is finally obtained, with an intrinsic viscosity of 1.30-1.92 dL/g, measured in a phenol/o-cresol solution at a weight ratio of 1:1 and in a water bath at a constant temperature of 25 ± 0.05° C, according to GB/T 17931-1999.

The chain extension reaction is carried out at a reaction temperature of 170-240° C, preferably 180-220° C, and at a superatmospheric pressure or an atmospheric pressure, as a function of the system used. The chain extension reaction is performed with a residence time of 2-15 minutes, preferably 4-10 minutes.

After the polycondensed product obtained in step S4 is sliced, a polyester granule is obtained. The polyester granule is subjected to a contact treatment process with an organic solvent or an aqueous solution of the organic solvent. To facilitate evaporation of the organic solvent in subsequent processes and to minimize its residue in the polyester product, an organic solvent with a boiling point not exceeding 100 °C is selected for the contact treatment process.

Preferably, in the step S5, the organic solvent is at least one selected from the group consisting of a ketone, an alcohol, an ether, and an aliphatic hydrocarbon.

Preferably, the boiling point of the organic solvent is ≤ 100 °C.

Optionally, the ketone is acetone and/or butanone, preferably acetone; optionally, the alcohol is methanol, ethanol, and/or isopropanol; optionally, the ether is at least one selected from the group consisting of diethyl ether, propyl ether, and tetrahydrofuran, preferably tetrahydrofuran; optionally, the aliphatic hydrocarbon is at least one selected from the group consisting of n-hexane, n-heptane, and cyclohexane, preferably n-hexane and/or cyclohexane.

Preferably, in the step S5, a temperature of the contact treatment is 35-50° C.

Preferably, in the step S5, the contact treatment is performed with a contact time of 5-20 h; more preferably 8-16 h.

Preferably, in the step S5, a mass ratio of the polyester granule to the organic solvent or the aqueous solution of the organic solvent is 1: (1-10), and a weight percentage of the organic solvent in the aqueous solution of the organic solvent is 35-90 wt.%.

More preferably, in the step S5, the mass ratio of the polyester granule to the organic solvent or the aqueous solution of the organic solvent is 1: (2-5).

The temperature and time of the contact treatment between the polyester granule and the organic solvent or the aqueous solution thereof, as well as the mass ratio of the polyester granule to the organic solvent or the aqueous solution thereof, all affect the final elution effect, thereby affecting the content of the cyclic ester and the TVOC content in the prepared biodegradable aliphatic polyester composition.

If the temperature of the contact treatment is too high, the organic solvent will evaporate quickly, resulting in greater loss; if the temperature of the contact treatment is too low, the elution effect cannot be effectively achieved.

If the contact time of the contact treatment is too long, a content of a residual organic solvent in the polyester will be too high; if the contact time of the contact treatment is too short, the elution effect cannot be effectively achieved.

If the mass ratio of the polyester granule to the organic solvent or the aqueous solution thereof is too high, although an elution effect can be effectively improved, more solvents are used, more waste liquids are generated, resulting in low economic efficiency and an excessive residual organic solvent in the polyester composition; if the mass ratio of the polyester granule to the organic solvent or the aqueous solution thereof is too low, uniform dispersion of the polyester granule in the solution cannot be achieved, resulting in an uneven and poor elution effect.

After the contact treatment, a treated product is filtered to remove a washing liquid, so that a wet granule and a washing filtrate are separated and recovered. Further, the wet granule is dried to a moisture content below 800 ppm and then subjected to a solid-phase polycondensation reaction.

Preferably, in the step S6, the solid-phase polycondensation reaction can be carried out in a rotary drum reactor, wherein a temperature of the solid-phase polycondensation reaction is 65-95°C, preferably 75-85 °C; a pressure of the solid-phase polycondensation reaction is 0.3-6 mbar, preferably 0.5-3 mbar; and a time of the solid-phase polycondensation reaction is 8-16 hours, preferably 10-16 hours.

This disclosure also claims a biodegradable mixture comprising components as follows:
(I) 5-95 wt.% of the biodegradable aliphatic polyester composition, based on a total weight of the components (I) and (II);
(II) 5-95 wt.% of at least one or more components selected from the group consisting of an aliphatic-aromatic copolyester, an aliphatic polyester, starch, cellulose, a polyhydroxyalkanoate, polyglycolic acid, and polylactic acid, based on the total weight of the components (I) and (II);
(III) 0-35 wt.% of talc, based on a total weight of components (I) to (IV);
(IV) 0-20 wt.% of calcium carbonate, based on the total weight of the components (I) to (IV).

The biodegradable aliphatic polyester composition and the biodegradable mixture of this disclosure are both biodegradable.

In this disclosure, a substance or a mixture containing the same is deemed "biodegradable", if it exhibits a biodegradation percentage of at least 90% as defined in DIN EN 13432.

According to DIN EN 13432, during a composting process, CO₂-free air is introduced into maturing compost, and the compost is subjected to a specific temperature process. Here, biodegradability is defined as a level of biodegradation, in percentages, represented by a ratio of a net amount of CO₂ released by a sample (a total amount of CO₂ released by the compost and the sample subtracts an amount of CO₂ released by the compost without the sample) to a maximum amount of CO₂ that can be released by the sample (calculated based on a carbon content in the sample). After only a few days of composting, a biodegradable polyester and a biodegradable polyester mixture typically show obvious signs of degradation, such as fungal growth, lysis, and perforation.

Other methods for determining biodegradability are described, for example, in ASTM D5338 and ASTM D6400.

This disclosure also claims a use of the above-described biodegradable mixture in preparation of a food packaging film and a food packaging bag.

The biodegradable aliphatic polyester composition of the present disclosure can be used to prepare a packaging film, particularly for producing a food packaging film with a thickness ranging from 8 µm to 50 µm, preferably from 10 µm to 25 µm.

By controlling the content of the cyclic ester to 538-1100 ppm, the risk of migration of the cyclic ester during use of the food packaging film prepared from the biodegradable aliphatic polyester composition is greatly reduced, thereby improving a migration-resistant level of the food packaging film while maintaining high transparency.

The food packaging film of the present disclosure with a thickness ranging from 8 µm to 50 µm has a migration-resistant level of no higher than 4, preferably no higher than 2.

The migration-resistant level in the present disclosure is evaluated using a method comprising steps as follows:
keeping a film, prepared from the biodegradable aliphatic polyester composition and having a thickness ranging from 8 µm to 50 µm, preferably from 10 µm to 25 µm, at a temperature of 60 °C and a humidity of 60% for 2 weeks; visually inspecting a surface appearance of the film, and evaluating based on criteria as follows:
Level 1: no white migrated substance is visually observed on the surface of the film;
Level 2: a white migrated substance is visually observed on the surface of the film, with an area of the white migrated substance not exceeding 10% of an area of the film;
Level 3: a white migrated substance is visually observed on the surface of the film, with an area of the white migrated substance ranging from 10% to 25% (excluding 10%) of the area of the film;
Level 4: a white migrated substance is visually observed on the surface of the film, with an area of the white migrated substance ranging from 25% to 45% (excluding 25%) of the area of the film;
Level 5: a white migrated substance is visually observed on the surface of the film, with an area of the white migrated substance ranging from 45% to 75% (excluding 45%) of the area of the film;
Level 6: a white migrated substance is visually observed on the surface of the film, with an area of the white migrated substance exceeding 75% of the area of the film.

Preferably, the food packaging film of the present disclosure with a thickness ranging from 8 µm to 50 µm has a static coefficient of friction (COF) ≥ 6.2, more preferably, the COF ≥ 8.8, and particularly preferably, the COF ≥ 11.3, exhibiting high adhesive capability.

The static coefficient of friction is measured according to ASTM D1894, "Static and Kinetic Coefficients of Friction of Plastic Film and Sheeting". In this disclosure, the static coefficient of friction is measured in the following manner.

A sample of a film with a thickness of 8 µm to 50 µm, preferably 10 µm to 25 µm, is wrapped around a support surface of a glass plate with a size of approximately 150×300 mm×2 mm. The film is completely adhered to the glass plate and has a smooth, wrinkle-free surface. The glass plate is placed in a horizontal position, and a stainless steel slider with a weight of 200±5 g and a size (i.e., length×width) of 63.5×5 mm is placed on the film. A moderate pressure is manually applied to a surface of the stainless steel slider to improve the adhesion of the stainless steel slider to the film surface. A load sensor is connected to one end of the stainless steel slider via a nylon thread. The load sensor is positioned on a movable crossbar of a force gauge and can move at a constant speed of 10 mm/min. The static coefficient of friction is defined as a ratio of a force (F) recorded by the force gauge at the instant the stainless steel slider is no longer adhered to the film (a tangential frictional force opposing sliding) to a gravity force (Fg) acting perpendicularly on the two contact surfaces (a gravity force of the stainless steel slider).

Preferably, the food packaging film of the present disclosure, with a thickness of 8µm to 50µm, has a haze of ≤18%, more preferably a haze of ≤15%, and particularly preferably a haze of ≤11%, measured according to a standard ASTM D1003, thereby exhibiting high transparency.

The packaging film can be formed either by extrusion blow molding or by casting. Taking the extrusion blow molding as an example, commonly used processing parameters are as follows:
Film Blowing Machine: A common low-bubble blow molding method of low density polyethylene (LDPE)/linear polyethylene (LLDPE) films is employed for upward extrusion.
Extruder Screw: A screw with a small number of mixing units is recommended to enhance a plasticizing and melting effect. A length-to-diameter ratio of the screw is suggested to be (30-32):1.
Die Head: To ensure uniform distribution of an extruded melt, a spiral flow channel die head is recommended.
Air Ring: Instead of a traditional single air ring, a dual-orifice or multi-orifice air ring is recommended to improve cooling efficiency and enhance the cooling effect and stability of the film bubble.
Blown Film Process: An extrusion melt temperature is recommended to be set at 115-150 °C. A blow-up ratio is recommended to be 3.5-4.0.

Compared to the prior art, the present disclosure brings the following beneficial effects:

The present disclosure develops a biodegradable aliphatic polyester composition, which exhibits an excellent migration-resistant level, outstanding adhesion capability, and good transparency, and meanwhile maintains good biodegradability.

### DETAILED DESCRIPTION

To better illustrate the objectives, technical solutions, and advantages of the present disclosure, the present disclosure will be further explained below in conjunction with specific embodiments, which do not limit the present disclosure in any way.

Raw materials used in the examples and comparative examples are all commercially available.

In this disclosure, a content of the cyclic ester was detected using the following method:
(1) Preparation of Standard Working Curves for Compounds Shown in Formulas (I) and (II):
   preparing a series of standard working solutions of the compounds shown in formulas (I) and (II) with concentrations of 0.1 mg/L, 1 mg/L, 5 mg/L, 10 mg/L, 20 mg/L, 50 mg/L, 100 mg/L, 200 mg/L, 500 mg/L, 1 g/L, and 2 g/L, respectively; taking butyl acetate as an internal standard with a concentration of 1 g/L; using an internal standard method and a gas chromatograph, Agilent 7820A, as a testing device; obtaining standard working curves of the compounds shown in formulas (I) and (II) respectively, wherein a peak area ratio of the compound shown in formula (I) or (II) to the butyl acetate was taken as an ordinate and a concentration ratio of the compound shown in formula (I) or (II) to the butyl acetate is taken as an abscissa, respectively.
(2) Testing of a Content of a Cyclic Ester in a Sample:
   quantitatively weighing 1.0 g of the sample, dissolving the sample in 10 mL of dichloromethane, filtering to remove insoluble components that were insoluble in dichloromethane;
   slowly adding 10 mL of methanol to a resulting dichloromethane solution to allow a polymer component to reprecipitate, centrifuging and retaining a supernatant as a testing sample to be tested;
   taking 1 mL of the supernatant and adding it to a 10 mL volumetric flask, adding 1 mL of butyl acetate solution at a concentration of 1 g/L as an internal standard, diluting to volume with methanol;
   measuring peak areas of the compounds shown in formula (I) and (II) in the testing sample using the same gas chromatograph and the same testing method as those used to obtain the standard working curves of the compounds shown in formulas (I) and (II);
   respectively calculating contents of the compounds shown in formulas (I) and (II), based on a peak area ratio of the compound shown in formula (I) to the butyl acetate, a peak area ratio of the compound shown in formula (II) to the butyl acetate and the standard working curves of the compounds shown in formulas (I) and (II);
   the sum of the contents of the compounds in formulas (I) and (II) is a total amount of the cyclic ester in the biodegradable aliphatic polyester composition.
(3) Testing Parameters of Agilent 7820A and Gas Chromatography Method:

**Table 1 Testing Parameters of Agilent 7820A**

| Type of Parameter | Name of Parameter | Parameter Value |
|---|---|---|
| Chromatographic column | GC | 23-1334 UL: 260 °C : 30m×320µm×1.8µm |
| | Sample injection | Back S/SL inlet with N₂ |
| | Sample outlet | Front FID Detector |
| Column oven | Oven Temperature | on |
| | Equilibration time, min | 3 |
| | Maximum Oven Temperature, °C | 250 |
| Hydrogen flame ionization detector (FID) | Heater, °C | 250 |
| | Hydrogen (H₂) Flow Rate, ml/min | 30 |
| | Air Flow Rate, mL/min | 300 |
| | Make-up Gas (N₂) Flow Rate, mL/min | 28 |
| Back Split/Splitless (S/SL) inlet | Heater, °C | 250 |
| | Pressure, psi | 6.9278 |
| | Total Flow Rate, mL/min | 180 |
| | Split Ratio | 5:1 |

Temperature program of the gas chromatograph:
Initial temperature: 60 °C, holding time: 1 min;
Ramp rate: 8 °C/min, to 180 °C, holding time: 2 min;
Ramp rate: 15 °C/min, to 250 °C, holding time: 5 min.

In the present disclosure, a content of total volatile organic compounds (TVOC) in the biodegradable aliphatic polyester composition was measured using the following method:
The PV-3341 method is used for reference, with a sample weight of 1.2000±0.0200 g, a headspace temperature of 120° C, and a headspace time of 5 hours. A gas chromatograph, Agilent 7697A-7890A, is used to perform the testing.

Testing parameters of the Agilent 7697A-7890A and testing methods are shown in Tables 2 and 3.

**Table 2 Testing Parameters of Agilent 7697A**

| Type of Parameter | Name of Parameter | Parameter Set Value |
|---|---|---|
| Temperature | Oven Temperature, °C | 120 |
| | Loop Temperature, °C | 150 |
| | Transfer Line Temperature, °C | 180 |
| Time | Vial Equilibration Time, min | 300 |
| | Injection Duration, min | 0.09 |
| | GC Cycle Time, min | 30 |
| Vial and Loop | Vial Volume, ml | 10 |
| | Vial Purge Mode | Custom |
| | Purge Flow Rate, mL/min | 50 |
| | Purge Pressure, psi | 23.2 |
| | Hold Time, min | 0.31 |
| | Loop Fill Mode | Custom |

**Table 3 Testing Parameters of Agilent 7890A**

| Type of Parameter | Name of Parameter | Parameter Value |
|---|---|---|
| Chromatographic column | GC | J&W 122-7032: 250°C : 30m×250µm×0.25µm |
| | Sample injection | Back S/SL inlet with DN |
| | Sample outlet | Front FID Detector |
| Column oven | Oven Temperature | on |
| | Equilibration time, min | 0.5 |
| | Maximum Oven Temperature, °C | 250 |
| Hydrogen flame ionization detector (FID) | Heater, °C | 250 |
| | Hydrogen (H₂) Flow Rate, mL/min | 30 |
| | Air Flow Rate, mL/min | 400 |
| | Make-up Gas (N₂) Flow Rate, mL/min | 25 |
| Back Split/Splitless (S/SL) inlet | Heater, °C | 200 |
| | Pressure, psi | 11.258 |
| | Septum purge flow rate, mL/min | 3 |
| | Total Flow Rate, mL/min | 11 |
| | Split Ratio | 7:1 |

Temperature program of the gas chromatograph (GC):
Initial temperature: 50 °C, holding time: 3 min;
Heating to 200°C, ramp rate: 12 °C/min, holding time: 4 min.

Unless otherwise specified, reagents, methods and equipment used in this disclosure are conventional reagents, methods and equipment in the art.

### Example 1

In Example 1, a biodegradable aliphatic polyester composition was provided, and its preparation method was as follows:
S1. physically mixing 187.9 kg of succinic acid, 205 kg of 1,4-butanediol and 0.85 kg of glycerol; after mixing, transferring a resulting mixture to a multi-stage stirred-tank reactor cascade; subjecting the mixture to an esterification reaction at a temperature of 180 °C under a pressure of 1.0 bar for 3 hours, and yielding a first esterified product with an intrinsic viscosity of 0.08 dL/g;
S2. physically mixing 73.1 kg of adipic acid, 60 kg of 1,4-butanediol, and 0.22 kg of tetrabutyl titanate; transferring a resulting mixture to a multi-stage stirred tank reactor cascade; subjecting the mixture to an esterification reaction at a temperature of 200°C under a pressure of 0.9 bar for 3 hours, and yielding a second esterified product with an intrinsic viscosity of 0.09 dL/g;
S3. mixing the first and second esterified products obtained in the steps S1 and S2 to obtain a mixture of the first and second esterified products; transferring the mixture to a vertical reactor with a stirrer, and adding 0.10 kg of tetrabutyl titanate; subjecting a resulting reaction mixture to a pre-polycondensation reaction at a temperature of 240 °C under a pressure of 0.35 bar for 120 minutes, and yielding a prepolymer with an intrinsic viscosity of 0.42 dL/g;
S4. transferring the prepolymer obtained in step S3 to a horizontal reactor with a stirrer, and subjecting the prepolymer to a polycondensation reaction at a temperature of 243 °C under a pressure of 2.0 mbar for 85 minutes, and yielding a polycondensed product with an intrinsic viscosity of 1.62 dL/g;
S5. slicing the polycondensed product obtained in step S4 to obtain a polyester granule, and subjecting the polyester granule to a contact treatment with a tetrahydrofuran aqueous solution, wherein a mass ratio of the polyester granule to the tetrahydrofuran aqueous solution was 1:5, a weight percentage of tetrahydrofuran in the tetrahydrofuran aqueous solution was 70%, a temperature of the contact treatment was 50 °C, and a time of the contact treatment was 14 hours; and yielding a product with an intrinsic viscosity of 1.59 dL/g;
S6. drying the product obtained after the contact treatment in step S5 and transferring a dried product to a rotary drum reactor to perform a solid-phase polycondensation reaction, wherein a temperature of the solid-phase polycondensation reaction was 75 °C, a pressure of the solid-phase polycondensation reaction was 3.0 mbar, and a time of the solid-phase polycondensation reaction was 16 hours; and yielding the biodegradable aliphatic polyester composition with an intrinsic viscosity of 1.65 dL/g.

Contents of the compounds represented by formula (I) and formula (II) in the biodegradable aliphatic polyester composition were shown in Table 4.

### Example 2

In Example 2, a biodegradable aliphatic polyester composition was provided, and its preparation method was as follows:
S1. physically mixing 187.9 kg of succinic acid, 215 kg of 1,4-butanediol and 0.9 kg of glycerol; after mixing, transferring a resulting mixture to a multi-stage stirred-tank reactor cascade; subjecting the mixture to an esterification reaction at a temperature of 155 °C under a pressure of 1.1 bar for 2 hours, and yielding a first esterified product with an intrinsic viscosity of 0.05 dL/g;
S2. physically mixing 125.0 kg of adipic acid, 100 kg of 1,4-butanediol, and 0.28 kg of tetrabutyl titanate; transferring a resulting mixture to a multi-stage stirred tank reactor cascade; subjecting the mixture to an esterification reaction at a temperature of 210°C under a pressure of 0.80 bar for 4 hours, and yielding a second esterified product with an intrinsic viscosity of 0.14 dL/g;
S3. mixing the first and second esterified products obtained in the steps S1 and S2 to obtain a mixture of the first and second esterified products; transferring the mixture to a vertical reactor with a stirrer, and adding 0.12 kg of tetrabutyl titanate; subjecting a resulting reaction mixture to a pre-polycondensation reaction at a temperature of 245 °C under a pressure of 0.55 bar for 75 minutes, and yielding a prepolymer with an intrinsic viscosity of 0.35 dL/g;
S4. transferring the prepolymer obtained in step S3 to a horizontal reactor with a stirrer, and subjecting the prepolymer to a polycondensation reaction at a temperature of 250 °C under a pressure of 2.0 mbar for 90 minutes, and yielding a polycondensed product with an intrinsic viscosity of 1.56 dL/g;
S5. slicing the polycondensed product obtained in step S4 to obtain a polyester granule, and subjecting the polyester granule to a contact treatment with a n-hexane aqueous solution, wherein a mass ratio of the polyester granule to the n-hexane aqueous solution was 1:2, a temperature of the contact treatment was 50 °C, and a time of the contact treatment was 16 hours; and yielding a product with an intrinsic viscosity of 1.54 dL/g;
S6. drying the product obtained after the contact treatment in step S5 and transferring a dried product to a rotary drum reactor to perform a solid-phase polycondensation reaction, wherein a temperature of the solid-phase polycondensation reaction was 65 °C, a pressure of the solid-phase polycondensation reaction was 0.5 mbar, and a time of the solid-phase polycondensation reaction was 12 hours; and yielding the biodegradable aliphatic polyester composition with an intrinsic viscosity of 1.57 dL/g.

Contents of the compounds represented by formula (I) and formula (II) in the biodegradable aliphatic polyester composition were shown in Table 4.

### Example 3

In Example 3, a biodegradable aliphatic polyester composition was provided, and its preparation method was as follows:
S1. physically mixing 187.9 kg of succinic acid, 215 kg of 1,4-butanediol and 0.90 kg of glycerol; after mixing, transferring a resulting mixture to a multi-stage stirred-tank reactor cascade; subjecting the mixture to an esterification reaction at a temperature of 190 °C under a pressure of 0.9 bar for 4 hours, and yielding a first esterified product with an intrinsic viscosity of 0.12 dL/g;
S2. physically mixing 73.1 kg of adipic acid, 60 kg of 1,4-butanediol, and 0.22 kg of tetrabutyl titanate; transferring a resulting mixture to a multi-stage stirred tank reactor cascade; subjecting the mixture to an esterification reaction at a temperature of 200°C under a pressure of 0.90 bar for 3 hours, and yielding a second esterified product with an intrinsic viscosity of 0.09 dL/g;
S3. mixing the first and second esterified products obtained in the steps S1 and S2 to obtain a mixture of the first and second esterified products; transferring the mixture to a vertical reactor with a stirrer, and adding 0.12 kg of tetrabutyl titanate; subjecting a resulting reaction mixture to a pre-polycondensation reaction at a temperature of 235 °C under a pressure of 0.7 bar for 90 minutes, and yielding a prepolymer with an intrinsic viscosity of 0.32 dL/g;
S4. transferring the prepolymer obtained in step S3 to a horizontal reactor with a stirrer, and subjecting the prepolymer to a polycondensation reaction at a temperature of 252 °C under a pressure of 2.2 mbar for 96 minutes, and yielding a polycondensed product with an intrinsic viscosity of 1.53 dL/g;
S5. slicing the polycondensed product obtained in step S4 to obtain a polyester granule, and subjecting the polyester granule to a contact treatment with a cyclohexane aqueous solution, wherein a mass ratio of the polyester granule to the cyclohexane aqueous solution was 1:5, a temperature of the contact treatment was 45 °C, and a time of the contact treatment was 8 hours; and yielding a product with an intrinsic viscosity of 1.50 dL/g;
S6. drying the product obtained after the contact treatment in step S5 and transferring a dried product to a rotary drum reactor to perform a solid-phase polycondensation reaction, wherein a temperature of the solid-phase polycondensation reaction was 75 °C, a pressure of the solid-phase polycondensation reaction was 2.0 mbar, and a time of the solid-phase polycondensation reaction was 14 hours; and yielding the biodegradable aliphatic polyester composition with an intrinsic viscosity of 1.52 dL/g.

Contents of the compounds represented by formula (I) and formula (II) in the biodegradable aliphatic polyester composition were shown in Table 4.

### Example 4

In Example 4, a biodegradable aliphatic polyester composition was provided, and its preparation method was as follows:
S1. physically mixing 152 kg of succinic acid, 185 kg of 1,4-butanediol and 0.90 kg of glycerol; after mixing, transferring a resulting mixture to a multi-stage stirred-tank reactor cascade; subjecting the mixture to an esterification reaction at a temperature of 170 °C under a pressure of 1.0 bar for 4 hours, and yielding a first esterified product with an intrinsic viscosity of 0.10 dL/g;
S2. physically mixing 73.1 kg of adipic acid, 60 kg of 1,4-butanediol, and 0.22 kg of tetrabutyl titanate; transferring a resulting mixture to a multi-stage stirred tank reactor cascade; subjecting the mixture to an esterification reaction at a temperature of 220°C under a pressure of 0.9 bar for 4 hours, and yielding a second esterified product with an intrinsic viscosity of 0.13 dL/g;
S3. mixing the first and second esterified products obtained in the steps S1 and S2 to obtain a mixture of the first and second esterified products; transferring the mixture to a vertical reactor with a stirrer, and adding 0.12 kg of tetrabutyl titanate; subjecting a resulting reaction mixture to a pre-polycondensation reaction at a temperature of 245 °C under a pressure of 0.3 bar for 140 minutes, and yielding a prepolymer with an intrinsic viscosity of 0.48 dL/g;
S4. transferring the prepolymer obtained in step S3 to a horizontal reactor with a stirrer, and subjecting the prepolymer to a polycondensation reaction at a temperature of 250 °C under a pressure of 1.6 mbar for 100 minutes, and yielding a polycondensed product with an intrinsic viscosity of 1.66 dL/g;
S5. slicing the polycondensed product obtained in step S4 to obtain a polyester granule, and subjecting the polyester granule to a contact treatment with an acetone aqueous solution, wherein a mass ratio of the polyester granule to the acetone aqueous solution was 1:4, a weight percentage of acetone in the acetone aqueous solution was 75%, a temperature of the contact treatment was 40 °C, and a time of the contact treatment was 5 hours; and yielding a product with an intrinsic viscosity of 1.64 dL/g;
S6. drying the product obtained after the contact treatment in step S5, transferring a dried product to a rotary drum reactor to perform a solid-phase polycondensation reaction, wherein a temperature of the solid-phase polycondensation reaction was 75 °C, a pressure of the solid-phase polycondensation reaction was 2.0 mbar, and a time of the solid-phase polycondensation reaction was 8 hours; and yielding the biodegradable aliphatic polyester composition with an intrinsic viscosity of 1.66 dL/g.

Contents of the compounds represented by formula (I) and formula (II) in the biodegradable aliphatic polyester composition were shown in Table 4.

### Example 5

In Example 5, a biodegradable aliphatic polyester composition was provided, and its preparation method was as follows:
S1. physically mixing 246 kg of succinic acid, 280 kg of 1,4-butanediol and 1.1 kg of glycerol; after mixing, transferring a resulting mixture to a multi-stage stirred-tank reactor cascade; subjecting the mixture to an esterification reaction at a temperature of 190 °C under a pressure of 0.8 bar for 3 hours, and yielding a first esterified product with an intrinsic viscosity of 0.12 dL/g;
S2. physically mixing 67 kg of adipic acid, 65 kg of 1,4-butanediol, and 0.30 kg of tetrabutyl titanate; transferring a resulting mixture to a multi-stage stirred tank reactor cascade; subjecting the mixture to an esterification reaction at a temperature of 210°C under a pressure of 0.8 bar for 5 hours, and yielding a second esterified product with an intrinsic viscosity of 0.14 dL/g;
S3. mixing the first and second esterified products obtained in the steps S1 and S2 to obtain a mixture of the first and second esterified products; transferring the mixture to a vertical reactor with a stirrer, and adding 0.15 kg of tetrabutyl titanate; subjecting a resulting reaction mixture to a pre-polycondensation reaction at a temperature of 245 °C under a pressure of 0.2 bar for 160 minutes, and yielding a prepolymer with an intrinsic viscosity of 0.55 dL/g;
S4. transferring the prepolymer obtained in step S3 to a horizontal reactor with a stirrer, and subjecting the prepolymer to a polycondensation reaction at a temperature of 248 °C under a pressure of 1.0 mbar for 110 minutes, and yielding a polycondensed product with an intrinsic viscosity of 1.74 dL/g;
S5. slicing the polycondensed product obtained in step S4 to obtain a polyester granule, and subjecting the polyester granule to a contact treatment with a tetrahydrofuran aqueous solution, wherein a mass ratio of the polyester granule to the tetrahydrofuran aqueous solution was 1:10, a weight percentage of tetrahydrofuran in the tetrahydrofuran aqueous solution was 70%, a temperature of the contact treatment was 45 °C, and a time of the contact treatment was 6 hours; and yielding a product with an intrinsic viscosity of 1.70 dL/g;
S6. drying the product obtained after the contact treatment in step S5 and transferring a dried product to a rotary drum reactor to perform a solid-phase polycondensation reaction, wherein a temperature of the solid-phase polycondensation reaction was 80 °C, a pressure of the solid-phase polycondensation reaction was 1.0 mbar, and a time of the solid-phase polycondensation reaction was 10 hours; and yielding the biodegradable aliphatic polyester composition with an intrinsic viscosity of 1.75 dL/g.

Contents of the compounds represented by formula (I) and formula (II) in the biodegradable aliphatic polyester composition were shown in Table 4.

### Example 6

In Example 6, a biodegradable aliphatic polyester composition was provided, and its preparation method was as follows:
S1. physically mixing 246 kg of succinic acid, 280 kg of 1,4-butanediol and 0.92 kg of glycerol; after mixing, transferring a resulting mixture to a multi-stage stirred-tank reactor cascade; subjecting the mixture to an esterification reaction at a temperature of 160 °C under a pressure of 1.2 bar for 2 hours, and yielding a first esterified product with an intrinsic viscosity of 0.06 dL/g;
S2. physically mixing 16 kg of adipic acid, 14 kg of 1,4-butanediol, and 0.20 kg of tetrabutyl titanate; transferring a resulting mixture to a multi-stage stirred tank reactor cascade; subjecting the mixture to an esterification reaction at a temperature of 190°C under a pressure of 1.1 bar for 3 hours, and yielding a second esterified product with an intrinsic viscosity of 0.05 dL/g;
S3. mixing the first and second esterified products obtained in the steps S1 and S2 to obtain a mixture of the first and second esterified products; transferring the mixture to a vertical reactor with a stirrer, and adding 0.17 kg of tetrabutyl titanate; subjecting a resulting reaction mixture to a pre-polycondensation reaction at a temperature of 248 °C under a pressure of 0.3 bar for 120 minutes, and yielding a prepolymer with an intrinsic viscosity of 0.30 dL/g;
S4. transferring the prepolymer obtained in step S3 to a horizontal reactor with a stirrer, and subjecting the prepolymer to a polycondensation reaction at a temperature of 250 °C under a pressure of 1.4 mbar for 60 minutes, and yielding a polycondensed product with an intrinsic viscosity of 1.18 dL/g;
S4'. introducing the polycondensed product obtained in step S4 into a static mixer, adding 1.1 kg of hexamethylene diisocyanate, blending and reacting at 200°C for 8 minutes to obtain a chain-extended product with an intrinsic viscosity of 1.85 dL/g;
S5. slicing the chain-extended product obtained in step S4' to obtain a polyester granule, and subjecting the polyester granule to a contact treatment with a tetrahydrofuran aqueous solution, wherein a mass ratio of the polyester granule to the tetrahydrofuran aqueous solution was 1:1, a weight percentage of tetrahydrofuran in the tetrahydrofuran aqueous solution was 70%, a temperature of the contact treatment was 35 °C, and a time of the contact treatment was 20 hours; and yielding a product with an intrinsic viscosity of 1.83 dL/g;
S6. drying the product obtained after the contact treatment in step S5 and transferring a dried product to a rotary drum reactor to perform a solid-phase polycondensation reaction, wherein a temperature of the solid-phase polycondensation reaction was 95 °C, a pressure of the solid-phase polycondensation reaction was 2.0 mbar, and a time of the solid-phase polycondensation reaction was 12 hours; and yielding the biodegradable aliphatic polyester composition with an intrinsic viscosity of 1.88 dL/g.

Contents of the compounds represented by formula (I) and formula (II) in the biodegradable aliphatic polyester composition were shown in Table 4.

**Table 4 Contents of cyclic esters in the biodegradable aliphatic polyester compositions in the examples**

| | Example 1 | Example 2 | Example 3 | Example 4 | Example 5 | Example 6 |
|---|---|---|---|---|---|---|
| Content of the compound shown in formula (I), ppm | 476 | 521 | 536 | 507 | 734 | 948 |
| Content of the compound shown in formula (II), ppm | 62 | 79 | 84 | 75 | 116 | 152 |
| Total content of the cyclic ester, ppm | 538 | 600 | 620 | 582 | 850 | 1100 |

### Comparative Example 1

In Comparative Example 1, a biodegradable aliphatic polyester composition was provided. The difference between the preparation methods of Comparative Example 1 and Example 1 was that steps S5 and S6 were omitted in the Comparative Example 1.

That is, the polycondensed product obtained in step S4 was the biodegradable aliphatic polyester composition.

Contents of the compounds represented by formulas (I) and (II) in the biodegradable aliphatic polyester composition were shown in Table 5.

### Comparative Example 2

In Comparative Example 2, a biodegradable aliphatic polyester composition was provided. Steps S1-S4 of the preparation method in the Comparative Example 2 were the same as those in Example 1. Step S5 of the preparation method in the Comparative Example 2 was as follows:
slicing the polycondensed product obtained in step S4 to obtain a polyester granule, and subjecting the polyester granule to a contact treatment with an acetone aqueous solution, wherein a mass ratio of the polyester granule to the acetone aqueous solution was 1:5, a weight percentage of acetone in the acetone aqueous solution was 70%, a temperature of the contact treatment was 50 °C, and a time of the contact treatment was 14 hours; and yielding a product with an intrinsic viscosity of 1.59 dL/g.

Further, step S6 was omitted in the Comparative Example 2.

That is, the product obtained after the contact treatment in step S5 was the biodegradable aliphatic polyester composition.

Contents of the compounds represented by formula (I) and formula (II) in the biodegradable aliphatic polyester composition were shown in Table 5.

### Comparative Example 3

In Comparative Example 3, a biodegradable aliphatic polyester composition was provided. Steps S1-S4 of the preparation method in the Comparative Example 3 were the same as those in Example 1. Further, in the Comparative Example 3, step S5 was omitted, and step S6 as below was directly performed after the step S4:
transferring the polycondensed product obtained in step S4 to a rotary drum reactor, performing a solid-phase polycondensation reaction at a temperature of 75 °C under a reaction pressure of 3.0 mbar with a reaction time of 13 hours; and yielding the biodegradable aliphatic polyester composition with an intrinsic viscosity of 1.67 dL/g.

Contents of the compounds of formula (I) and formula (II) in the biodegradable aliphatic polyester composition were shown in Table 5.

### Comparative Example 4

In Comparative Example 4, a biodegradable aliphatic polyester composition was provided, and its preparation method was as follows:
S1. physically mixing 187.9 kg of succinic acid, 220 kg of 1,4-butanediol and 0.85 kg of glycerol; after mixing, transferring a resulting mixture to a multi-stage stirred-tank reactor cascade; subjecting the mixture to an esterification reaction at a temperature of 230 °C under a pressure of 1.0 bar for 5 hours, and yielding a first esterified product with an intrinsic viscosity of 0.16 dL/g;
S2. physically mixing 73.1 kg of adipic acid, 48 kg of 1,4-butanediol, and 0.22 kg of tetrabutyl titanate; transferring a resulting mixture to a multi-stage stirred tank reactor cascade; subjecting the mixture to an esterification reaction at a temperature of 200°C under a pressure of 1.0 bar for 2 hours, and yielding a second esterified product with an intrinsic viscosity of 0.04 dL/g;
S3. mixing the first and second esterified products obtained in the steps S1 and S2 to obtain a mixture of the first and second esterified products; transferring the mixture to a vertical reactor with a stirrer, and adding 0.10 kg of tetrabutyl titanate; subjecting a resulting reaction mixture to a pre-polycondensation reaction at a temperature of 220 °C under a pressure of 0.85 bar in the reactor for 80 minutes, and yielding a prepolymer with an intrinsic viscosity of 0.28 dL/g;
S4. transferring the prepolymer obtained in step S3 to a horizontal reactor with a stirrer, and subjecting the prepolymer to a polycondensation reaction at a temperature of 252 °C under a pressure of 2.0 mbar for 180 minutes, and yielding a polycondensed product with an intrinsic viscosity of 1.53 dL/g;
S5. slicing the polycondensed product obtained in step S4 to obtain a polyester granule, and subjecting the polyester granule to a contact treatment with a tetrahydrofuran aqueous solution, wherein a mass ratio of the polyester granule to the tetrahydrofuran aqueous solution was 1:4, a weight percentage of tetrahydrofuran in the tetrahydrofuran aqueous solution was 75%, a temperature of the contact treatment was 50 °C, and a time of the contact treatment was 8 hours; and yielding a product with an intrinsic viscosity of 1.50 dL/g;
S6. drying the product obtained after the contact treatment in step S5 and transferring a dried product to a rotary drum reactor to perform a solid-phase polycondensation reaction at a temperature of 75 °C under a pressure of 1.5 mbar with a reaction time of 16 hours; and yielding the biodegradable aliphatic polyester composition with an intrinsic viscosity of 1.54 dL/g.

Contents of the compounds represented by formula (I) and formula (II) in the biodegradable aliphatic polyester composition were shown in Table 5.

### Comparative Example 5

In Comparative Example 5, a biodegradable aliphatic polyester composition was provided. Steps S1-S4 of the preparation method in the Comparative Example 5 were the same as those in Example 1, and the difference between the preparation methods in the Comparative Example 5 and Example 1 was steps S5-S6 as listed below:
Step S5: slicing the polycondensed product obtained in step S4 to obtain a polyester granule, and subjecting the polyester granule to a contact treatment with a tetrahydrofuran aqueous solution, wherein a mass ratio of the polyester granule to the tetrahydrofuran aqueous solution was 1:1, a weight percentage of tetrahydrofuran in the tetrahydrofuran aqueous solution was 70%, a temperature of the contact treatment was 25 °C, and a time of the contact treatment was 3 hours; and yielding a product with an intrinsic viscosity of 1.60 dL/g;
Step S6: drying the product obtained after the contact treatment in step S5 and transferring a dried product to a rotary drum reactor to perform a solid-phase polycondensation reaction at a temperature of 75 °C under a reaction pressure of 2.0 mbar with a reaction time of 14 hours; and yielding the biodegradable aliphatic polyester composition with an intrinsic viscosity of 1.66 dL/g.

Contents of the compounds represented by formulas (I) and (II) in the biodegradable aliphatic polyester composition were shown in Table 5.

### Comparative Example 6

In Comparative Example 6, a biodegradable aliphatic polyester composition was provided. Steps S1-S4 of the preparation method in the Comparative Example 6 were the same as those in Example 1, and the difference between the preparation methods of the Comparative Example 6 and Example 1 was steps S5-S6 as listed below:
Step S5: slicing the polycondensed product obtained in step S4 to obtain a polyester granule, and subjecting the polyester granule to a contact treatment with a tetrahydrofuran aqueous solution, wherein a mass ratio of the polyester granule to the tetrahydrofuran aqueous solution was 1:4, a weight percentage of tetrahydrofuran in the tetrahydrofuran aqueous solution was 70%, a temperature of the contact treatment was 50 °C, and a time of the contact treatment was 8 hours; and yielding a product with an intrinsic viscosity of 1.59 dL/g;
Step S6: drying the product obtained after the contact treatment in step S5 and transferring a dried product to a rotary drum reactor to perform a solid-phase polycondensation reaction at a temperature of 60 °C under a reaction pressure of 10.0 mbar with a reaction time of 8 hours; and yielding the biodegradable aliphatic polyester composition with an intrinsic viscosity of 1.60 dL/g.

Contents of the compounds represented by formulas (I) and (II) in the biodegradable aliphatic polyester composition were shown in Table 5.

### Comparative Example 7

In Comparative Example 7, a biodegradable aliphatic polyester composition was provided. Steps S1-S4 of the preparation method in the Comparative Example 7 were the same as those in Example 1, and the difference between the preparation methods of the Comparative Example 7 and Example 1 was steps S5-S6 as listed below:
Step S5: slicing the polycondensed product obtained in step S4 to obtain a polyester granule, and subjecting the polyester granule to a contact treatment with a tetrahydrofuran aqueous solution, wherein the contact treatment is performed in two steps, in a first contact treatment, a mass ratio of the polyester granule to the tetrahydrofuran aqueous solution was 1:15, a weight percentage of tetrahydrofuran in the tetrahydrofuran aqueous solution was 75%, a temperature of the first contact treatment was 60°C, and a time of the first contact treatment was 30 hours; after the first contact treatment, subjecting the polyester granule to a second contact treatment, and in the second contact treatment, a mass ratio of the polyester granule to the tetrahydrofuran aqueous solution was 1:12, a weight percentage of tetrahydrofuran in the tetrahydrofuran aqueous solution was 75%, a temperature of the second contact treatment was 60 °C, and a time of the second contact treatment was 22 hours; yielding a product obtained from the polyester granule with an intrinsic viscosity of 1.51 dL/g;
step S6 was omitted.

That is, the product obtained in step S5 was the biodegradable aliphatic polyester composition.

Contents of the compounds represented by formulas (I) and (II) in the biodegradable aliphatic polyester composition were shown in Table 5.

### Comparative Example 8

In Comparative Example 8, a biodegradable aliphatic polyester composition was provided, and its preparation method was as follows:
S1. physically mixing 187.9 kg of succinic acid, 205 kg of 1,4-butanediol and 0.85 kg of glycerol; after mixing, transferring a resulting mixture to a multi-stage stirred-tank reactor cascade; subjecting the mixture to an esterification reaction at a temperature of 205 °C under a pressure of 0.8 bar for 4 hours, and yielding an esterified product with an intrinsic viscosity of 0.12 dL/g;
S3. transferring the esterified product obtained in step S1 to a vertical reactor with a stirrer, and adding 0.10 kg of tetrabutyl titanate; subjecting a resulting reaction mixture to a pre-polycondensation reaction at a temperature of 245 °C under a pressure of 0.50 bar in the reactor for 110 minutes, followed by adding 0.22 kg of tetrabutyl titanate; and yielding a prepolymer with an intrinsic viscosity of 0.43 dL/g;
S4. transferring the prepolymer obtained in step S3 to a horizontal reactor with a stirrer, and subjecting the prepolymer to a polycondensation reaction at a temperature of 250 °C under a pressure of 1.5 mbar for 90 minutes, and yielding a polycondensed product with an intrinsic viscosity of 1.68 dL/g;
S5. slicing the polycondensed product obtained in step S4 to obtain a polyester granule, and subjecting the polyester granule to a contact treatment with a tetrahydrofuran aqueous solution, wherein a mass ratio of the polyester granule to the tetrahydrofuran aqueous solution was 1:8, a weight percentage of tetrahydrofuran in the tetrahydrofuran aqueous solution was 70%, a temperature of the contact treatment was 50 °C, and a time of the contact treatment was 12 hours; and yielding a biodegradable aliphatic polyester with an intrinsic viscosity of 1.65 dL/g;
S6. drying the product obtained after the contact treatment in step S5 and transferring a dried product to a rotary drum reactor to perform a solid-phase polycondensation reaction at a temperature of 100 °C under a pressure of 3.0 mbar with a time of 10 hours; and yielding the biodegradable aliphatic polyester composition with an intrinsic viscosity of 1.70 dL/g.

Contents of the compounds shown in formula (I) and formula (II) in the biodegradable aliphatic polyester composition were shown in Table 5.

**Table 5 Content of cyclic esters in biodegradable aliphatic polyester compositions in Comparative Examples 1-8 (CE1-CE8)**

| | CE1 | CE2 | CE3 | CE4 | CE5 | CE6 | CE7 | CE8 |
|---|---|---|---|---|---|---|---|---|
| Content of the compound shown in formula (I), ppm | 7036 | 2842 | 4829 | 1836 | 2114 | 2245 | 355 | 1384 |
| Content of the compound shown in formula (II), ppm | 1132 | 465 | 752 | 278 | 317 | 346 | 55 | 0 |
| Total content of the cyclic ester, ppm | 8168 | 3307 | 5581 | 2114 | 2431 | 2591 | 410 | 1384 |

### Performance Testing

The biodegradable aliphatic polyester compositions prepared in the above examples and comparative examples were subjected to performance testing, specifically including migration-resistant level, static coefficient of friction (COF), and haze testing. Testing results were shown in Tables 6 and 7.

For TVOC content, a granule of the biodegradable aliphatic polyester composition could be directly used for testing.

For migration-resistant level, COF testing, and haze testing, a thickness of a film material was 15 ± 2 µm.

**Table 6 Testing Results of Examples 1-6**

| | Example 1 | Example 2 | Example 3 | Example 4 | Example 5 | Example 6 |
|---|---|---|---|---|---|---|
| TVOC, ppm | 42 | 55 | 51 | 48 | 89 | 157 |
| Migration-resistant level | 1 | 1 | 1 | 1 | 2 | 4 |
| COF | 13.9 | 11.3 | 12.4 | 13.2 | 8.8 | 6.2 |
| Haze | 10.3 | 12.3 | 13.0 | 11.7 | 14.9 | 18.0 |

**Table 7 Testing results of Comparative Examples 1-8 (CE1-CE8)**

| | CE1 | CE2 | CE3 | CE4 | CE5 | CE6 | CE7 | CE8 |
|---|---|---|---|---|---|---|---|---|
| TVOC (ppm) | 223 | 192 | 201 | 182 | 175 | 177 | 386 | 162 |
| Migration-resistant level | 6 | 6 | 6 | 5 | 5 | 5 | 1 | 4 |
| COF | 1.8 | 3.6 | 2.4 | 5.1 | 4.8 | 4.6 | 4.1 | 5.6 |
| Haze | 28.9 | 25.1 | 27.0 | 24.3 | 23.9 | 23.2 | 20.6 | 22.5 |

According to the testing results in Table 6, it can be seen that the contents of the cyclic esters in the biodegradable aliphatic polyester compositions prepared in the various examples of this disclosure were ≤1100 ppm, the TVOC contents were ≤157 ppm, and the film materials prepared from the biodegradable aliphatic polyester compositions had migration-resistant levels of no higher than 4, COFs of ≥6.2, and hazes of ≤18%. Specifically, the TVOC contents were in a range of from 42 ppm to 157 ppm, the static coefficients of friction were maintained in a range of from 6.2 to 13.9, and the hazes were maintained in a range of from 10.3 to 18.0. Thus, the biodegradable aliphatic polyester compositions of this disclosure had excellent migration-resistant levels, high adhesion capacity, and low hazes.

According to the testing results of the comparative examples, it can be seen from Comparative Examples 1-3 that when the step of contact treatment or solid-pahse polycondensation reaction was omitted, the contents of the cyclic esters in the biodegradable aliphatic polyester compositions were too high, resulting in a poor migration-resistant level, low adhesion capacity, and a high haze.

As can be seen from Comparative Examples 4-8, reasonably controlling the monomer ratio of the biodegradable aliphatic polyester composition, controlling the intrinsic viscosities of the products in the various steps of the preparation process, and adopting appropriate conditions for the contact treatment and the solid-phase polycondensation reaction all can affect the content of the cyclic ester in the biodegradable aliphatic polyester composition, thereby affecting the migration-resistant level, the adhesion capacity and the haze of the material.

Finally, it should be noted that the above embodiments are only intended to illustrate the technical solutions of the present disclosure, rather than to limit the protection scope of the present disclosure. Although the present disclosure has been described in detail with reference to preferred embodiments, those skilled in the art should understand that modifications or equivalent substitutions can be made to the technical solutions of the present disclosure without departing from the essence and scope of the present disclosure.

## Claims

1. A biodegradable aliphatic polyester composition, comprising components as follows:
(i) a biodegradable aliphatic polyester, comprising:
Component A, a dicarboxylic acid, based on a total molar amount of the component A, comprising:
a1, 65-95 mol% of succinic acid, or an ester derivative of the succinic acid, or a mixture thereof;
a2, 5-35 mol% of adipic acid, or an ester derivative of the adipic acid, or a mixture thereof;
Component B, 1,4-butanediol, at least in an equimolar amount to that of the Component A;
(ii) a cyclic ester, comprising compounds shown in formula (I) and formula (II): 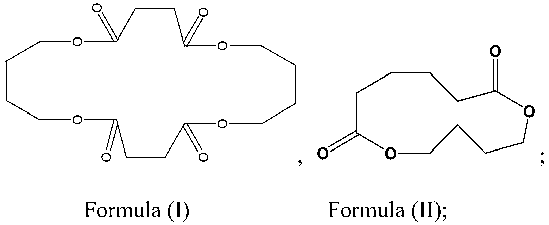
wherein based on a total weight of the biodegradable aliphatic polyester composition, a total content of the cyclic ester with structures shown in formula (I) and formula (II) is 538-1100 ppm;
a content of total volatile organic compounds (TVOC) in the biodegradable aliphatic polyester composition is no more than 157 ppm.

2. The biodegradable aliphatic polyester composition according to claim 1, wherein the Component A, based on the total molar amount of the component A, comprises:
a1, 72-82 mol% of the succinic acid, or the ester derivative of the succinic acid, or the mixture thereof;
a2, 18-28 mol% of the adipic acid, or the ester derivative of the adipic acid, or the mixture thereof.

3. The biodegradable aliphatic polyester composition according to claim 1, wherein the total content of the cyclic ester with structures shown in formulas (I) and (II) is 538-850 ppm, based on the total weight of the biodegradable aliphatic polyester composition.

4. The biodegradable aliphatic polyester composition according to claim 1, wherein the biodegradable aliphatic polyester composition further comprises a chain extender, a content of the chain extender is in a range of from 0.05 wt.% to 2.0 wt.%, based on the total weight of the biodegradable aliphatic polyester composition.

5. The biodegradable aliphatic polyester composition according to claim 4, wherein the chain extender comprises one or more components selected from the group consisting of:
c1, an isocyanate;
c2, a peroxide;
c3, an epoxide; and
c4, oxazoline, oxazine, caprolactam, and/or carbodiimide.

6. The biodegradable aliphatic polyester composition according to claim 1, wherein the biodegradable aliphatic polyester composition comprises a crosslinking agent having at least three functional groups, and the crosslinking agent accounts for 0-3 wt.% of the total weight of the biodegradable aliphatic polyester composition.

7. The biodegradable aliphatic polyester composition according to claim 6, wherein the crosslinking agent is at least one selected from the group consisting of trimethylolpropane, pentaerythritol, and glycerol.

8. A preparation method of the biodegradable aliphatic polyester composition according to any one of claims 1-7, comprising steps as follows:
S1. mixing Component a1 with a portion of Component B, with or without a catalyst, to obtain a Slurry A; subjecting the Slurry A to an esterification reaction or a transesterification reaction until an intrinsic viscosity of a first esterified product, as determined according to GB/T 17931-1999, is 0.05-0.12 dL/g;
S2. mixing Component a2 with remaining Component B, with or without the catalyst, to obtain a Slurry B; subjecting the Slurry B to an esterification reaction or a transesterification reaction until an intrinsic viscosity of a second esterified product, as determined according to GB/T 17931-1999, is 0.05-0.14 dL/g;
S3. mixing the first and second esterified products obtained in steps S1 and S2 to obtain a mixture; subjecting the mixture to a pre-polycondensation reaction until an intrinsic viscosity of a prepolymer, as determined according to GB/T 17931-1999, is 0.30-0.55 dL/g;
S4. subjecting the prepolymer obtained in step S3 to a polycondensation reaction until an intrinsic viscosity of a polycondensed product, as determined according to GB/T 17931-1999, is 1.18-1.85 dL/g;
S5. slicing the polycondensed product obtained in step S4 to obtain a polyester granule, and subjecting the polyester granule to a contact treatment with an organic solvent or an aqueous solution of the organic solvent;
S6. drying a treated product obtained in step S5, and then performing a solid-phase polycondensation reaction to obtain the biodegradable aliphatic polyester composition.

9. The preparation method of the biodegradable aliphatic polyester composition according to claim 8, wherein a step S4' is performed after step S4 and before step S5, and the step S4' is performed as follows:
mixing the polycondensed product obtained in the step S4 with a chain extender to perform a chain extension reaction; after the chain extension reaction, obtaining a chain extension product with an intrinsic viscosity of 1.30-1.92 dL/g, as determined according to GB/T 17931-1999.

10. The preparation method of the biodegradable aliphatic polyester composition according to claim 8, wherein the preparation method of the biodegradable aliphatic polyester composition satisfies at least one selected from the group consisting of items (1)-(5) below:
(1) in the step (3), the intrinsic viscosity of the prepolymer is 0.35-0.48 dL/g, measured according to GB/T 17931-1999;
(2) in the step S5, a temperature of the contact treatment is 35-50° C;
(3) in the step S5, a time of the contact treatment is 5-20 h;
(4) in the step S5, a mass ratio of the polyester granule to the organic solvent or the aqueous solution of the organic solvent is 1: (1-10), and a weight percentage of the organic solvent in the aqueous solution of the organic solvent is 35-90 wt.%;
(5) in the step S6, a temperature of the solid-phase polycondensation reaction is 65-95°C, a time of the solid-phase polycondensation reaction is 8-16 hours, and a pressure of the solid-phase polycondensation reaction is 0.3-6 mbar.

11. A biodegradable mixture, comprising components as follows:
(I) 5-95 wt.% of the biodegradable aliphatic polyester composition according to any one of claims 1-7, based on a total weight of the components (I) and (II);
(II) 5-95 wt.% of at least one or more components selected from the group consisting of an aliphatic-aromatic copolyester, an aliphatic polyester, starch, cellulose, a polyhydroxyalkanoate, polyglycolic acid, and polylactic acid, based on the total weight of the components (I) and (II);
(III) 0-35 wt.% of talc, based on a total weight of components (I) to (IV);
(IV) 0-20 wt.% of calcium carbonate, based on the total weight of the components (I) to (IV).

12. A use of the biodegradable aliphatic polyester composition according to any one of claims 1-7 in preparation of a food packaging film and a food packaging bag.

13. The use according to claim 12, wherein a thickness of the food packaging film is in a range of from 8 µm to 50 µm, and the food packaging film satisfies at least one selected from the group consisting of items (1)-(3):
(1) a migration-resistant level of the food packaging film is no higher than 4;
(2) a static coefficient of friction (COF) of the food packaging film is ≥ 6.2;
(3) a haze of the food packaging film is ≤18%.
